# FASCICULE DE BREVET EUROPEEN

(11) **EP 1 256 062 B1**
(45) Date de publication et mention de la délivrance du brevet: **19.12.2007**
(21) Numéro de dépôt: 01904043.5
(22) Date de dépôt: 02.02.2001
(51) Int. Cl.: G06F 13/38, G06K 19/07

(54) **TRANSPORT D'UNITES DE PROTOCOLE D'OBJET ELECTRONIQUE PORTABLE PAR PROTOCOLE POUR PERIPHERIQUES DE MICRO-ORDINATEUR**
PROTOKOLLEINHEITENÜBERTRAGUNG VON TRAGBAREM ELEKTRONISCHEM GEGENSTAND MIT PROTOKOLL FÜR MIKRORECHNERPERIPHERIEGERÄTE
TRANSPORTING PORTABLE ELECTRONIC OBJECT PROTOCOL UNITS BY PROTOCOL FOR MICRO-COMPUTER FOR PERIPHERALS

(30) Priorité: 03.02.2000 FR 0001399
(43) Date de publication de la demande: 13.11.2002
(73) Titulaire: GEMPLUS, 13420 Gémenos (FR)
(72) Inventeur: COULIER, Charles, 13360 Roquevaire (FR)
(86) Numéro de dépôt international: PCT/FR2001/000326
(87) Numéro de publication internationale: WO 2001/057684

(56) Documents cités:
- EP-A- 0 577 006
- WO-A1-00/16255
- FR-A- 2 783 336
- US-A- 5 420 412
- JOURNAL ARTICLE: 'USB UNIVERSAL SERIAL BUS SPECIFICATION VERSION 1.0' UNIVERSAL SERIAL BUS (USB) 15 Janvier 1996, pages 1 - 268, XP002917782

## Description

La présente invention concerne la connexion au niveau applicatif entre un terminal du type micro-ordinateur et un objet électronique portable, tel qu'une carte à puce, dite carte à microcontrôleur ou carte à circuit intégré, en tant que périphérique du terminal.

Au niveau applicatif, les échanges entre une station d'accueil d'une carte à puce, telle qu'un terminal, et la carte à puce sont réalisés au moyen d'unités de données de protocole applicatif APDU (Application Protocol Data Unit) qui sont des commandes transmises par le terminal à la carte et des réponses transmises par la carte au terminal.

Le format de ces commandes et réponses est défini au niveau applicatif par la norme ISO 7816-4 et ses annexes A et B pour acheminer des unités de protocole selon le protocole de transmission asynchrone à l'alternat par caractères "T=0" ou le protocole de transmission asynchrone à l'alternat par blocs "T=1". Les commandes sont toujours déclenchées par le terminal et la carte doit être du type proactive pour transférer des données à son initiative vers le terminal.

Par ailleurs la norme "Universal Serial Bus Specification", septembre 1998, définit un bus normalisé série universel USB pour connecter un micro-ordinateur PC à des périphériques.

Les transferts de données entre le micro-ordinateur et un périphérique sont tous déclenchés par le micro-ordinateur, le périphérique étant toujours esclave du micro-ordinateur contrairement à une carte à puce par rapport au terminal. Toutes les transactions effectuées à travers le bus USB sont réalisées au moyen de paquets dont les formats et séquencements sont différents de ceux des commandes et réponses définis par la norme ISO 7816-4 pour carte à puce.

Le document de brevet WO-00/16255 A correspond à un état de la technique selon A54(3) et A54(4) CBE.

WO-00/16255 A décrit un objet électronique portable, tel une carte à puce, dans lequel cohabite une interface ISO 7816 et une interface USB.

La présente invention vise à adapter un objet électronique portable comme périphérique d'un micro-ordinateur, et plus précisément à acheminer des unités de protocole APDU dans un bus USB afin que l'objet électronique portable soit reconnu par un micro-ordinateur comme un périphérique.

A cette fin, un procédé pour transporter des commandes ayant toutes un en-tête et pour certaines un champ de données depuis un terminal vers un objet électronique portable, et des réponses ayant pour certaines un champ de données et toutes une queue depuis l'objet électronique portable vers le terminal, est caractérisé par les étapes suivantes :
fournir un bus entre le terminal et l'objet pour échanger des transactions descendantes comprenant chacune successivement un paquet de début transmis depuis le terminal vers l'objet, un paquet de données transmis depuis le terminal vers l'objet et un paquet de fin transmis depuis l'objet vers le terminal, et des transactions montantes comprenant chacune un paquet de début transmis depuis le terminal vers l'objet, un paquet de données transmis depuis l'objet vers le terminal et un paquet de fin transmis depuis le terminal vers l'objet,
encapsuler l'en-tête et le champ de données, lorsqu'il existe, de chaque commande respectivement dans les champs de données de paquets de données respectivement d'une transaction descendante et d'au moins une transaction descendante, et
encapsuler le champ de données, lorsqu'il existe, et la queue de chaque réponse dans le champ de données du paquet de données d'au moins une transaction montante.

Grâce aux encapsulations des commandes et réponses dans des paquets de données de transaction, l'invention supprime, lorsque l'objet électronique portable est une carte à puce, le lecteur de la carte qui est maintenant reliée à un bus série universel (USB) normalisé selon la norme USB, offre un débit élevé supérieur au mégabit par seconde pour les échanges entre le terminal et la carte, et permet la connexion de plusieurs cartes à puce, ou plus généralement d'objets électroniques portables, au terminal à travers un bus commun.

Parmi les.quatre modes de transfert de données selon la norme USB, l'invention montre que les transactions conformes au mode de transfert "volumineux" (Bulk Transfer) et au mode de transfert de contrôle (Control Transfer) sont particulièrement bien adaptées au fonctionnement d'un objet électronique portable.

Pour chacun de ces deux modes, l'invention prévoit que chaque paquet de début peut comprendre un identificateur annonçant le sens du transfert du paquet de données le succédant dans une transaction ; le paquet de début de chaque transaction descendante relative au transfert d'au moins une partie du champ de données d'une commande ou d'une réponse peut comprendre un identificateur indiquant le sens du transfert du paquet de données le succédant dans ladite transaction ; le champ de données d'un paquet de données dans la transaction descendante contenant l'en-tête d'une commande peut contenir également la longueur attendue du champ de données de la réponse succédant à ladite commande et/ou la longueur du champ de données de ladite commande ; le champ de données d'un paquet de données d'une transaction montante contenant le début du champ de données d'une réponse peut contenir également la longueur utile du champ de données de ladite réponse, et des bits de bourrage en nombre proportionnel à la différence entre la longueur attendue du champ de données de ladite réponse incluse dans une commande précédente et la longueur utile peuvent être contenus dans le champ de données du paquet de données de la deuxième transaction montante contenant la queue de ladite réponse.

Selon d'autres caractéristiques de l'invention pour le mode de transfert de contrôle, le paquet de début de la première transaction descendante dans une séquence de plusieurs transactions successives relatives à une commande ou une réponse peut comprendre un identificateur annonçant le début de la séquence ; le début du champ de données d'un paquet de données dans la transaction descendante contenant l'en-tête d'une commande contient un identificateur du format de la commande ; et la transaction montante contenant le paquet de données dans lequel le début de la réponse est encapsulée peut précéder une transaction descendante dont le paquet de début comprend un identificateur annonçant le début d'une séquence de transaction montante et dont le paquet de données a une structure identique au paquet de données de la transaction descendante contenant l'en-tête d'une commande et contient un identificateur du format de ladite réponse et la longueur attendue du champ de données de ladite réponse.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un bloc-diagramme schématique d'une connexion entre un terminal du type micro-ordinateur et une carte à puce à travers un bus USB selon l'invention ;
- la figure 2 est un diagramme de quatre formats de commande connus selon la norme ISO 7816-4 ;
- la figure 3 est un diagramme de deux formats de réponse de carte connus selon la norme ISO 7816-4 ;
- la figure 4 est un diagramme de trois types de paquets USB connus ;
- les figures 5 à 8 sont respectivement des diagrammes de transfert pour des couples commande-réponse selon les figures 2 et 3 entre le terminal et la carte à puce au moyen de transactions à trois paquets selon une première réalisation de l'invention ; et
les figures 9 et 10 sont respectivement des diagrammes de transfert pour des couples commande-réponse au moyen de transactions à trois paquets selon une deuxième réalisation de l'invention.

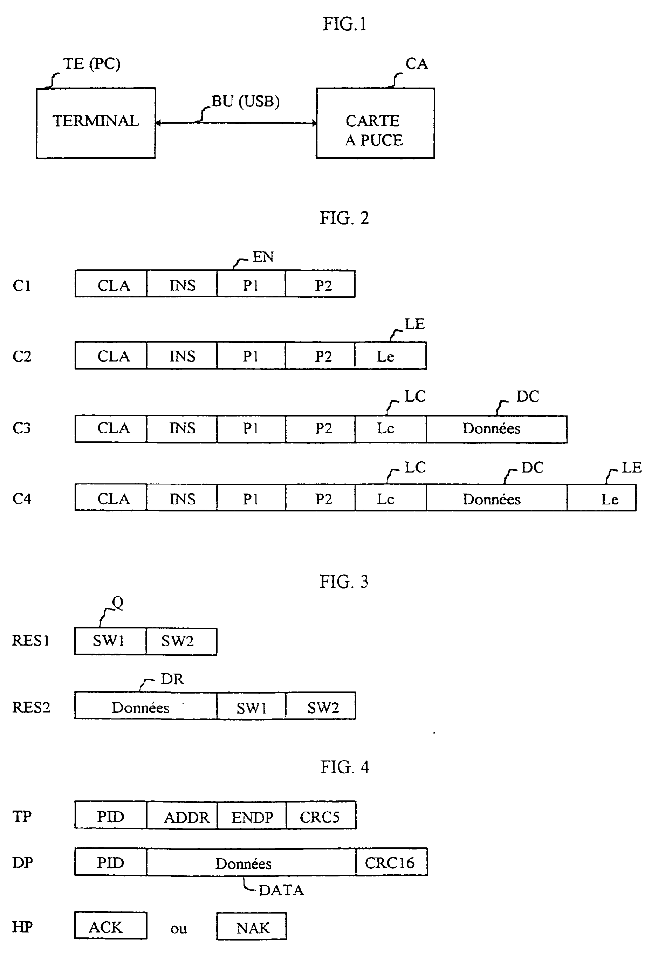

En référence à la figure 1, un terminal TE, tel qu'un micro-ordinateur (Personal Computer PC), est relié à un objet électronique portable, tel qu'une carte à puce CA, dite également carte à circuit intégré ou carte à microcontrôleur, à travers un bus à quatre fils BU selon la norme USB (Universal Serial Bus). Le bus peut être jalonné d'un ou plusieurs moyens de connexion (hubs) à d'autres moyens périphériques, tels que souris, clavier, imprimante, table graphique, etc.

Le bus BU comprend deux fils d'alimentation et deux fils de transmission de paquets offrant un débit typiquement égal à 1,5 Mbit/s ou 12 Mbit/s.

Le "terminal" désigné par TE dans la suite de la description englobe le système d'ordinateur hôte, désigné par "host" dans la norme USB, comprenant un contrôleur matériel et logiciel (Host Controller) jouant le rôle d'interface dans le terminal avec le bus BU.

La carte à puce CA est un dispositif périphérique logique et physique au sens "Device" de la norme USB, qui comporte une interface (Device Endpoint) constituant une source d'informations et accomplissant des fonctions s'interfaçant avec le bus BU.

Dans la couche de protocole de la carte à puce CA est également incluse une entité logicielle qui gère le protocole normalisé de commande-réponse selon la norme ISO 7816 et qui est en relation avec l'interface selon le protocole USB dans la carte à puce.

Il est rappelé, comme montré à la figure 2, qu'une unité de données de protocole applicatif APDU selon la norme ISO 7816-4, constituant une commande établie par le terminal TE à transmettre à la carte à puce CA, contient un en-tête EN ayant 4 octets : un octet CLA désignant une classe de l'instruction contenue dans l'octet suivant, un octet INS désignant un code d'instruction lié à une commande du système d'exploitation dans le microcontrôleur de la carte à puce CA, et deux octets P1 et P2 désignant des paramètres relatifs à l'instruction. Une commande peut en outre comprendre au moins l'un des champs successifs suivants après le paramètre P2 : un champ LC contenant la longueur Lc du champ de données de la commande exprimée en nombre d'octets, un champ de données DC de longueur variable pouvant atteindre 256 ou 65535 octets, et un champ LE contenant la longueur Le exprimée en nombre d'octets, attendue dans le champ de données DR de la réponse RES2 à ladite commande.

Comme illustré à la figure 2, une unité APDU de type commande peut présenter l'un des quatre formats suivants :
- Cas 1, commande C1 : la carte ne reçoit aucune donnée entrante, et par conséquent la longueur Lc est égale à 0, et ne renvoie aucune donnée sortante dans une réponse RES1, et par conséquent la longueur Le est égale à 0 ; la commande C1 est alors réduite à l'en-tête EN ;
- Cas 2, commande C2 : la carte ne reçoit aucune donnée entrante ce qui impose la longueur Lc égale à 0, mais renvoie des données sortantes dans une réponse RES2 ce qui impose la longueur Le différente de 0 ; ainsi la commande C2 comprend les champs EN et LE ;
- Cas 3, commande C3 : la carte reçoit des données entrantes ce qui impose que la longueur de champ de données Lc soit différente de 0 et donc la présence d'un champ de données DC, et ne renvoie aucune donnée sortante dans une réponse RES1, ce qui impose la longueur attendue Le égale à 0 ; la commande C3 comprend alors l'en-tête EN suivi des champs LC et DC ;
- Cas 4, commande C4 : la carte reçoit des données entrantes mais également renvoie des données sortantes DR dans une réponse RES2 et par conséquent les longueurs Lc et Le sont différentes de 0 ; la commande C4 comprend successivement les quatre champs EN, LC, DC et LE.

Comme montré à la figure 3, une réponse établie par la carte CA présente l'un de deux formats RES1 et RES2. Le format de réponse RES1 contient seulement une queue Q à 2 octets d'état (Status Word) SW1 et SW2. Le format de réponse RES2 contient en plus un champ de données DR de longueur variable, précédant une queue Q. Lorsque la carte CA reçoit une commande C1 ou C3, elle renvoie une réponse RES1 ne comprenant qu'une queue Q ; lorsque la carte CA reçoit une commande C2 ou C4, elle renvoie une réponse comprenant un champ de données DR précédant la queue Q et ayant une longueur au plus égale à la longueur Le annoncée dans la commande C2 ou C4 précédant ladite réponse.

En référence maintenant à la norme USB du bus série universel BU, les trois types principaux de paquets selon cette norme pouvant composer une transaction pour transférer des données suivant l'un ou l'autre sens entre le terminal et la carte à puce sont illustrés à la figure 4 en ayant fait abstraction au début de chaque paquet d'un champ de synchronisation (SYNC) comprenant un délimiteur de début de paquet (Start-of-Packet SOP), et d'un délimiteur de fin de paquet (End-of-Packet EOP) :
- paquet de début de transaction de type jeton TP (Token Packet) comprenant un identificateur de paquet PID à 1 octet incluant le type "Token" du paquet et le nom de celui-ci, un champ d'adresse à 7 bits ADDR identifiant la source ou la destination d'un paquet de données succédant au paquet de début, un champ à 4 bits ENDP (Endpoint) contenant l'adresse de la fonction qui est visée particulièrement dans la carte en tant que dispositif périphérique, et un champ de contrôle à redondance cyclique CRC5 à 5 bits ; il existe quatre paquets de début TP : un paquet nommé OUT pour commander un transfert de données descendantes depuis le terminal TE vers la carte CA, un paquet nommé IN pour commander le transfert de données montantes depuis la carte CA vers le terminal TE, un paquet nommé SOF (Start-of-Frame) pour marquer et indiquer le nombre de paquets au début d'une trame de plusieurs paquets, et un paquet d'initialisation nommé SETUP pour initialiser une synchronisation entre le terminal et la carte au début d'une transaction de données ;
- paquet de données DP (Data Packet) intercalé entre un paquet de début TP et un paquet de fin HP dans une transaction et comprenant un champ d'identificateur PID, un champ de données DATA comportant au plus 1023 octets, et un champ de contrôle de redondance cyclique CRC16 à 16 bits ; deux types de paquets de données DP sont désignés par des identificateurs DATA0 et DATA1 notamment pour distinguer des paquets de données respectivement de rangs pairs et de rangs impairs au cours de transactions de données successives dans une séquence selon certains modes de transfert;
paquet de fin de transaction HP (Handshake Packet) ne comprenant qu'un champ d'identificateur PID pour rapporter l'état de transfert précédent de données ; les paquets HP sont de deux types : un paquet d'accusé de réception de données ACK qui indique qu'un paquet de données DP précédent a été reçu correctement, et un paquet de non accusé de réception NAK qui indiquent que le récepteur à qui sont destinées les données contenues dans le paquet de données précédent ne les a pas acceptées ou le transmetteur qui doit transmettre les données ne peut les envoyer.

I1 est également rappelé qu'un périphérique selon la norme USB, tel que la carte CA selon l'invention, n'a le droit d'émettre que sous la commande du terminal (Host) qu'après avoir reçu un paquet de début TP ; une transaction, qu'elle soit une transaction descendante pour commande ou qu'elle soit une transaction montante pour réponse, commence par un paquet de début TP transmis par le terminal TE à la carte CA. Si les données demandées par le paquet TP ne sont pas disponibles, le périphérique répond en utilisant un paquet NAK qui indique que la fonction visée dans le périphérique n'était pas capable d'accepter les données ou que cette fonction n'a aucune donnée à transmettre.

Selon une première réalisation de l'invention, les unités de protocole APDU sont échangées selon le mode de transfert "volumineux" (Bulk Transfer) défini selon la norme USB, entre le terminal TE et la carte CA. Le mode de transfert "volumineux" est conçu pour des dispositifs qui nécessitent de communiquer des quantités relativement élevées de données à des instants très variables et en utilisant une largeur de bande disponible quelconque. En outre, ce mode "volumineux" est relativement simple puisqu'il n'impose aucune structure du contenu des données et n'utilise que des paquets de début de transaction TP de type OUT pour transférer des données suivant le sens descendant depuis le terminal TE vers la carte CA, et des paquets de début de transaction de type IN pour transférer des données suivant le sens montant depuis la carte CA vers le terminal TE.

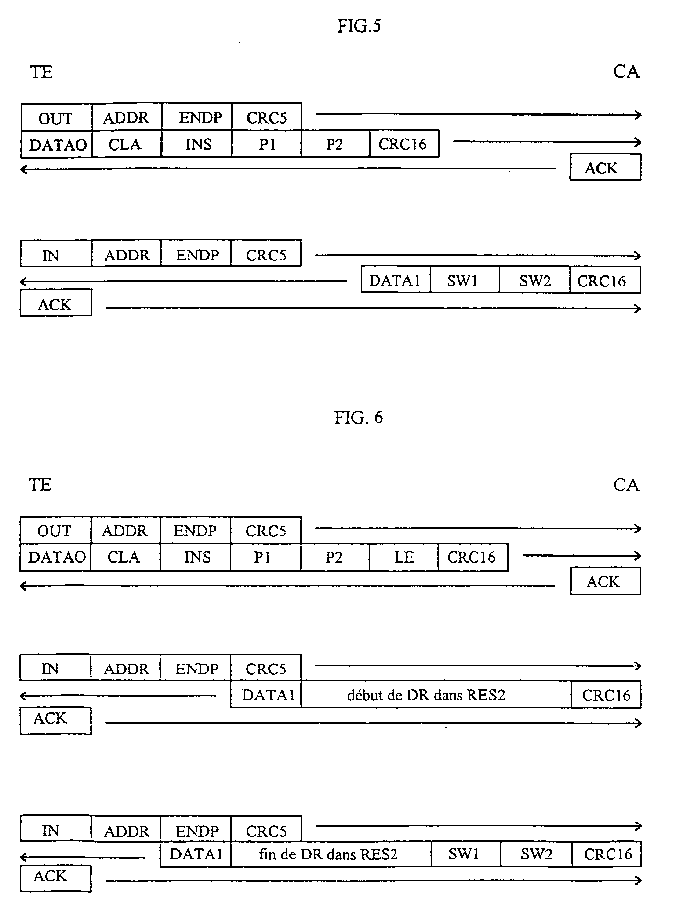

Les caractéristiques précédentes du mode de transfert "volumineux" en font un mode bien adapté à l'échange d'unités de protocole APDU, comme cela apparaîtra ci-après en référence aux figures 5 à 8. Les transactions selon le mode "Bulk" sont à trois paquets, comprenant un paquet de début TP de type OUT ou IN, un paquet de données DATA0 ou DATA1 et un paquet de fin HP de type ACK ou NAK.

Il est supposé dans les figures 5 à 8 et également dans les figures suivantes 9 et 10 que le paquet de fin HP est toujours de type ACK à la suite d'une réception correcte de données précédente.

Lorsqu'un couple de commande C1-RES1 selon le cas 1 est à échanger entre le terminal et la carte, six paquets sont échangés successivement dans des transactions descendante et montante, comme montré à la figure 5. La transaction descendante comprend un paquet de début OUT, un paquet de données DATA0 comprenant l'en-tête EN de la commande C1 transmis par le terminal vers la carte et un paquet de fin ACK indiquant au terminal que la carte a reçu correctement le paquet DATA0. La transaction montante comprend un paquet de début IN, un paquet DATA1 dont le champ de données comprend la queue Q à 2 octets SW1 et SW2 de la réponse RES1 et transmis par la carte vers le terminal, et un paquet de fin ACK indiquant à la carte que le paquet DATA1 a été reçu correctement par le terminal.

Lorsqu'une commande C2 suivie d'une réponse RES2 avec un champ de données sortantes sont échangées selon le cas 2 de la norme ISO 7816-4, une transaction descendante et une ou plusieurs transactions montantes sont échangées entre le terminal TE et la carte CA, comme montré à la figure 6. Le nombre des transactions montantes dépend de la longueur Le du champ de données DR dans la réponse RES2 comparativement à la longueur maximale du champ DATA des paquets DP qui peut être négociée préalablement à 8, 16, 32 ou 64 octets par exemple entre le terminal TE et la carte CA. Il est supposé dans la figure 6 que le champ DR est fragmenté dans deux champs DATA si bien que la séquence comprend en tout trois transactions.

La transaction descendante selon le cas 2 illustré comprend un paquet de début OUT, un paquet de données DATA0 dont le champ de données comprend les 4 octets de l'en-tête EN suivi d'un octet LE contenant la longueur Le des données dans la réponse RES2, lequel paquet de données DATA0 est transmis par le terminal vers la carte, et un paquet de fin ACK accusant de la réception correcte du paquet DATA0 et transmis par la carte vers le terminal. La première des deux transactions montantes comprend un paquet de début IN transmis par le terminal, un paquet de données DATA1 transmis par la carte au terminal et dont le champ de données comporte le début du champ de données DR de la réponse RES2, et un paquet de fin ACK transmis par le terminal à la carte lorsque le terminal a reçu correctement le paquet DATA1. La deuxième transaction montante comprend un paquet de début IN, un paquet de données DATA1 transmis par la carte au terminal et ayant un champ de données DATA comprenant éventuellement le reste des données contenues dans le champ DR de la réponse RES2 concaténé avec la queue Q à 2 octets SW1 et SW2 de la réponse RES2, et finalement un paquet de fin ACK transmis par le terminal à la carte en réponse au paquet correct DATA1.

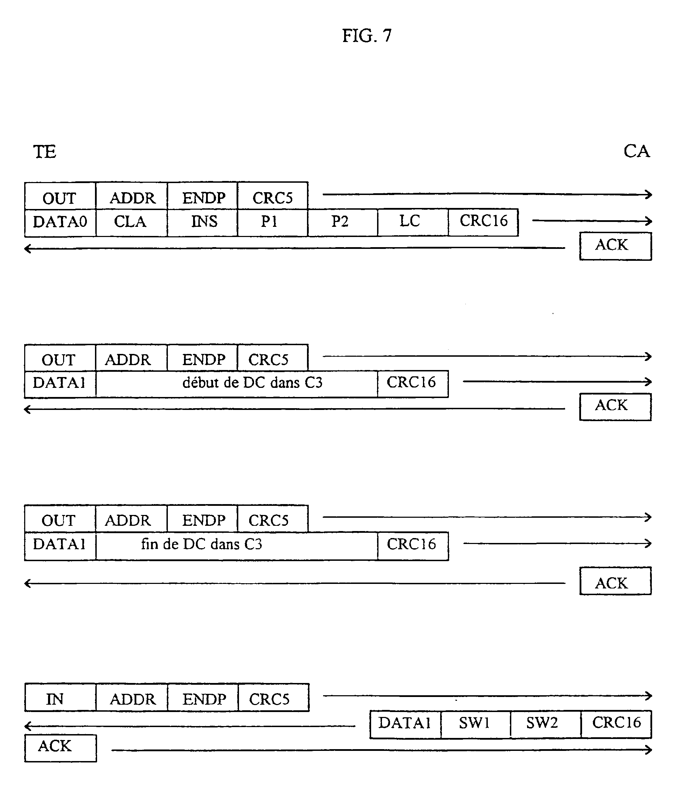

Un échange de commande C3 avec une réponse RES1 sans donnée comprend par exemple deux transactions pour transmettre les données de commande DC et donc comprend trois transactions descendantes et une transaction montante, comme montré à la figure 7. La première transaction descendante est analogue à la première transaction montrée à la figure 6, et comprend un paquet de début OUT, un paquet de données DATA0 et un paquet de fin ACK, mais le champ de données dans le paquet DATA0 comprend l'en-tête EN et le champ de longueur LC de la commande C3. Les deux autres transactions descendantes sont de même type et comprennent chacune un paquet OUT de manière à commander le transfert de données de commande depuis le terminal TE vers la carte CA, un paquet de données DATA1 dont le champ de données comprend le début ou la fin du champ de données DC de la commande C3, transmis depuis le terminal vers la carte, et un paquet de fin ACK transmis par la carte au terminal en réponse à un paquet de données précédent correct DATA1. La dernière transaction est similaire à la dernière transaction montante montrée à la figure 6 et comprend un paquet de début IN transmis par le terminal à la carte, un paquet de données DATA1 dont le champ de données ne comprend que les 2 octets SW1 et SW2 de la queue Q de la réponse RES1 et qui est transmis par la carte au terminal, et un paquet de fin ACK transmis par le terminal.

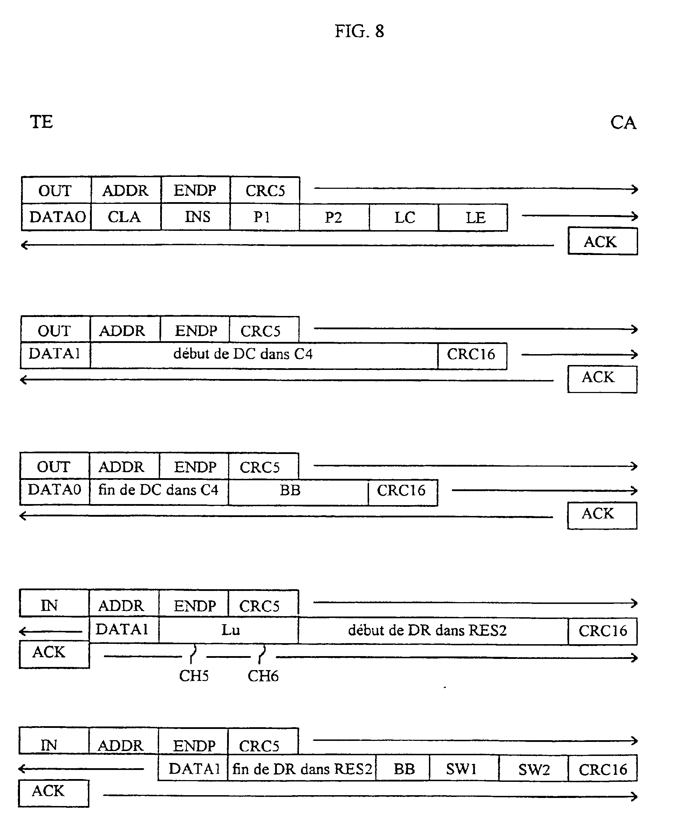

Lorsqu'une commande C4 doit être transmise par le terminal à la carte, par exemple trois transactions descendantes et deux transactions montantes sont échangées entre le terminal et la carte, comme montré à la figure 8. Dans la première transaction, un paquet de données DATA0 est transmis par le terminal à la carte après la transmission d'un paquet de début OUT et comprend dans son champ de données DATA l'en-tête EN, le champ de longueur de commande LC et le champ de longueur attendue LE prélevés de la commande C4, et est suivi par un paquet de fin ACK transmis par la carte au terminal lorsque le paquet précédent DATA0 est correct. Les deux transactions descendantes suivantes sont composées chacune d'un paquet OUT de manière à commander le transfert de parties du champ de données DC de la commande C4 depuis le terminal vers la carte, d'un paquet de données DATA1 dont le champ de données DATA comprend une première partie, ou une partie intermédiaire ou une partie finale, du champ de données DC de la commande C4, transmis par le terminal à la carte, et un paquet de fin ACK transmis par la carte au terminal lorsque le paquet précédent DATA1 a été reçu correctement par la carte. Les deux transactions montantes concernent le transfert des données du champ DR de la réponse RES2 annoncées par la commande C2. La première transaction montante comprend un paquet de début IN transmis par le terminal, puis un paquet de données DATA1 comprenant notamment le début du champ de données DR de la réponse RES2 transmis par la carte au terminal, et un paquet de fin ACK transmis par le terminal à la carte. La deuxième transaction montante comprend un paquet de début IN transmis par le terminal, un paquet DATA1 dont le champ de données comprend éventuellement la fin des données sortant de la carte, contenues dans le champ DR de la réponse RES2 ainsi que la queue Q à 2 octets SW1 et SW2 de la réponse RES2, et un paquet de fin ACK transmis par le terminal à la carte.

Selon l'exemple illustré à la figure 8, des champs CH5 et CH6 précédant le début du champ de données DR de la réponse RES2 dans le paquet de données DATA1 de la première transaction montante indique la longueur utile Lu des données dans le champ DR de la réponse RES2 qui sont réellement transmises, Lu pouvant être inférieure ou égale à la longueur attendue Le annoncée par la commande C4. Bien que la longueur des données demandées dans la réponse attendue soit déclarée dès le début de la séquence, dans le champ LE du paquet DATA0 au cours de la première transaction descendante précédente, il est préférable en cas d'incident ou d'erreur détecté par la carte CA invalidant tout ou partie des données à transmettre au terminal TE, d'indiquer au terminal la longueur Lu des données réellement transmises par la réponse RES2. Dans le cas où Lu < Le, le champ de données DR de longueur Le est terminé par des octets de bits de bourrage BB non significatifs (Padding) en nombre (Le - Lu) uniquement destinés à respecter des règles de protocole. Ainsi, le champ DATA du paquet de données DATA1 de la première transaction montante dans la figure 8 comprend la longueur utile Lu et le début du champ de données DC de la réponse RES2, et le champ de données DATA du paquet de données DATA1 de la deuxième transaction montante comprend la fin du champ de données DR de la réponse RES2 éventuellement suivie de (Lₑ - Lᵤ) octets de bits de bourrage BB, et suivie des deux octets SW1 et SW2 de la queue Q de la réponse RES2.

La variante avec champs CH5 et CH6 et bits de bourrage BB décrite ci-dessus est également applicable aux deux transactions montantes contenant une réponse RES2 à la commande C2 selon le transfert de la figure 6.

Selon une deuxième réalisation, les couples de commande-réponse selon la norme ISO 7816-4 sont échangés entre la carte CA et le terminal TE en mode de transfert de contrôle (Control Transfer) selon la norme USB.

Le mode de transfert de contrôle est particulièrement utilisé pour l'initialisation des périphériques selon la norme USB. Ce mode est ainsi reconnu par tous les contrôleurs ce qui a suscité son intérêt pour l'appliquer, selon l'invention, à une carte à puce.

Comme pour le mode de transfert "volumineux" précédemment décrit, les unités de protocole APDU, c'est-à-dire les commandes et les réponses, sont encapsulées selon l'invention dans des paquets de données DP selon la norme USB au cours de transactions. Chaque transaction descendante relative au transfert au moins partiel d'une commande C1 à C4, ou chaque transaction montante relative au transfert partiel d'une réponse RES1, RES2 comprend trois paquets, un paquet de début TP transmis par le terminal à la carte, puis un paquet de données DP transmis par le terminal pour une commande ou par la carte pour une réponse, et un paquet de fin HP normalement de type ACK transmis par l'entité, le terminal ou la carte, ayant reçu correctement le paquet de données précédent DP. Comme déjà dit, chaque transaction n'est liée qu'à un seul sens de transfert de données, soit le sens descendant depuis le terminal vers la carte et indiqué par un paquet de début de transaction avec identificateur OUT, soit le sens montant depuis la carte vers le terminal indiqué par un paquet de début de transaction avec identificateur IN.

Dans le mode de transfert de contrôle, une séquence de plusieurs transactions est définie par trois étapes (Stages), à savoir une étape d'établissement (Setup Stage), une étape de données (Data Stage) et une étape d'état (Status Stage).

L'étape d'établissement définit le sens de transfert et la longueur des données à transférer de manière à faciliter le décodage des transactions dans l'étape de données suivante. Dans un soucis d'optimisation des échanges selon l'invention, l'en-tête EN d'une commande C1 à C4 est contenu dans le paquet de données DP toujours avec identificateur DATA0 au cours de l'étape d'établissement, en tirant partie des libertés de codage offertes par la norme USB.

Lorsqu'elle existe, l'étape de données comprend une ou plusieurs transactions OUT selon le sens descendant pour des données appartenant à une commande C3 ou C4, ou une ou plusieurs transactions IN selon le sens montant pour des données appartenant à une réponse RES2. La quantité de données qui est spécifiée avec le sens de transfert au cours de l'étape d'établissement précédente, peut être répartie dans plusieurs transactions en fonction de la taille des paquets de données pré-négociée qui est généralement bien inférieure à la taille maximale des champs DC et DR. Ainsi chaque étape de données correspond à un transfert de données unidirectionnel.

L'étape d'état du mode de transfert de contrôle clôture la séquence à trois étapes. Elle utilise toujours un paquet de données DP de type DATA1 et annonce le changement du sens de circulation des données par rapport à l'étape précédente ; si par exemple l'étape de données précédente consiste en un transfert OUT selon le sens descendant, l'étape d'état suivante concerne une transaction IN selon le sens montant.

Selon l'invention, pour les couples commande-réponse selon la norme ISO 7816-4 :
- l'en-tête d'une commande, ou d'une commande simulée pour initier une réponse, est toujours encapsulée dans le paquet DATA0 d'une étape d'établissement ;
- les données descendantes DC dans une commande C3 ou C4 sont encapsulées dans au moins un paquet DP d'une étape intermédiaire de données ;
- les données montantes DR dans une réponse RES2 à une commande C2 ou C4 sont encapsulées dans au moins un paquet DP dans une étape intermédiaire de données ; et
- la queue Q constituée par les deux mots d'état SW1 et SW2 d'une réponse RES1, RES2 est encapsulée dans le paquet de données d'une dernière transaction de l'étape intermédiaire de données précitée précédant une étape d'état à la fin d'une séquence.

Les cas 1 et 2 correspondant aux commandes C1 et C2 comprennent alors une seule séquence avec une ou des transactions montantes de type IN pour encapsuler une réponse sans ou avec des données, et les cas 3 et 4 correspondant aux commandes C3 et C4 comprennent une première séquence SQ1 avec une ou des transactions descendantes de type OUT pour encapsuler le champ de données DC de la commande C3 ou C4, et ensuite une deuxième séquence SQ2 avec une transaction montante de type IN pour encapsuler une réponse RES1 sans des données pour le cas 3, ou avec une ou plusieurs transactions montantes pour encapsuler le champ de données DR de la réponse RES2 pour le cas 4.

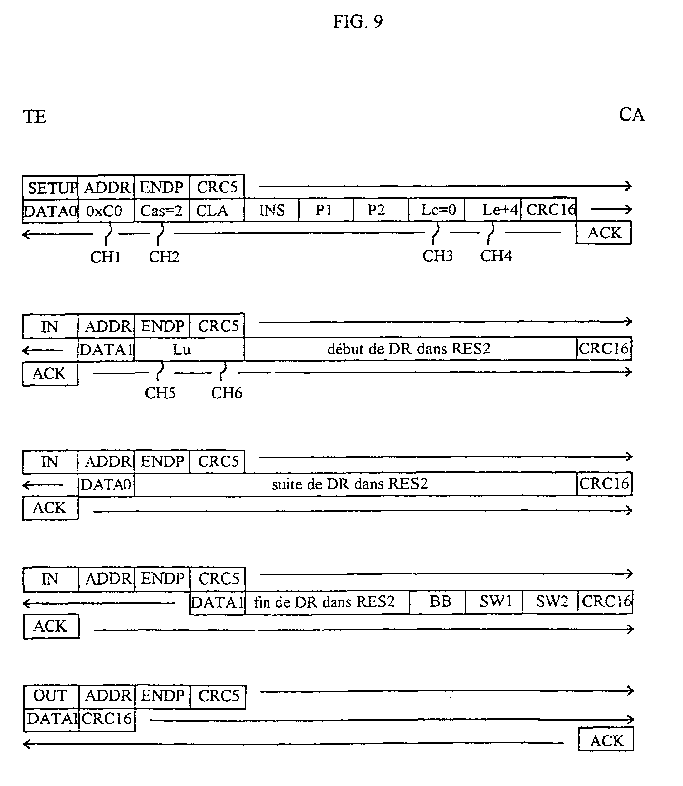

A titre d'exemple, la figure 9 montre une séquence en mode de transfert de contrôle pour une commande C2 avec une réponse RES2 dont le champ de données DR est réparti dans des paquets de données DP avec identificateurs respectifs DATA1, DATA0 et DATA1 dans trois transactions montantes de l'étape de données intermédiaire.

L'étape d'établissement constitue une première transaction montante de la séquence et comprend un paquet SETUP et un paquet DATA0 transmis par le terminal vers la carte, et un paquet ACK transmis par la carte en réponse au paquet DATA0 correctement reçu. Le paquet DATA0 encapsule non seulement les 4 octets CLA, INS, P1 et P2 de l'en-tête EN de la commande C2 mais comporte également deux champs CH1 et CH2 précédant le champ de classe CLA après le champ d'identificateur PID de type SETUP, et deux champs CH3 et CH4 succédant au champ de paramètre P2 avant le champ de contrôle CRC16.

Le champ CH1 indique à la carte que les cinq octets suivants CH2, CLA, INS, P1 et P2 qui lui succèdent dans le champ de données DATA du paquet DATA0 sont des octets propriétaires. Le champ CH2 contient un identificateur de format pour indiquer à la carte le format de la commande ou de la réponse que transmet la séquence en cours.

Les champs CH3 et CH4 comprennent respectivement la longueur Lc du champ de données DC de la commande et la longueur attendue Le du champ de données DR de la réponse augmentée de 4, respectivement lues dans les champs LC et LE, lorsqu'ils existent, dans la commande à transmettre. En l'occurrence, pour la commande C2, Lc est égal à 0 et Le est différent de 0. Le chiffre 4 additionné à la longueur Le comptabilise deux champs CH5 et CH6 qui sont inclus au début du champ de données DATA du premier paquet DATA1 de l'étape de données suivante et qui précèdent le début du champ de données DR de la réponse RES2, et les deux octets SW1 et SW2 dans la queue Q de la réponse RES2.

L'étape de données comprend trois transactions montantes selon l'exemple illustré à la figure 9. Chaque transaction comprend un paquet de début TP de type IN pour initier un transfert de données de la carte CA vers le terminal TE, un paquet de données DATA1 ou DATA0 comprenant une partie du champ DR de la réponse RES2 et transmis par la carte au terminal, et un paquet de fin ACK confirmant à la carte que le paquet de données précédemment transmis par celle-ci a été reçu correctement par le terminal.

Les champs CH5 et CH6 précédant le début du champ de données DR de la réponse RES2 dans le premier paquet de données DATA1 indique, comme déjà dit en référence à la figure 8, la longueur utile Lu des données dans le champ DR de la réponse RES2 qui sont réellement transmises au terminal TE, Lu pouvant être inférieure ou égale à Le. Dans le cas où Lu < Le, le champ de données DR de longueur Le est terminé par des octets de bits de bourrage BB non significatifs (Padding) en nombre (Le - Lu). Ainsi, selon l'exemple illustré à la figure 9, la deuxième transaction montante dans l'étape intermédiaire de données comprend un paquet IN, un paquet de données DATA0 dont le champ DATA comprend une partie intermédiaire du champ de données DC de la réponse RES2, et un paquet de fin ACK ; la dernière transaction de l'étape de données comprend après un paquet IN, un paquet de données DATA1 dont le champ de données DATA comprend la fin du champ de données DR de la réponse RES2 éventuellement suivie de (Lₑ - Lᵤ) octets de bits de bourrage BB, et suivie des deux octets SW1 et SW2 de la queue Q de la réponse RES2, et également un paquet de fin ACK.

L'étape d'état terminant la séquence de la figure 9 est constituée par une transaction descendante présentant un sens opposé à celui des transactions montantes de données IN précédemment exécutées. Cette transaction descendante comprend un paquet de début OUT transmis par le terminal TE vers la carte CA, un paquet DATA1 sans champ de données transmis par le terminal vers la carte et un paquet de fin ACK accusant la réception correcte du paquet précédent DATA1 par la carte au terminal.

Dans l'exemple montré à la figure 9, il a été supposé que les données demandées par la commande C2 à l'étape d'établissement étaient disponibles dans la carte et par conséquent la carte pouvait les retransmettre dans une réponse RES2 encapsulée. Dans le cas contraire, dès la deuxième transaction, la carte répond par un paquet de fin HP de type NAK au premier paquet IN transmis par le terminal pour signifier au terminal que les données demandées ne sont pas prêtes à être transmises.

Pour le cas de la commande C1, la séquence comprend l'étape d'établissement à paquet de début SETUP selon la figure 9, une étape de données ne comprenant qu'une seule transaction IN avec un paquet de données DATA1 dont le champ de données ne comprend que les octets SW1 et SW2 de la réponse RES1, et l'étape d'état à paquet de début OUT selon la figure 9.

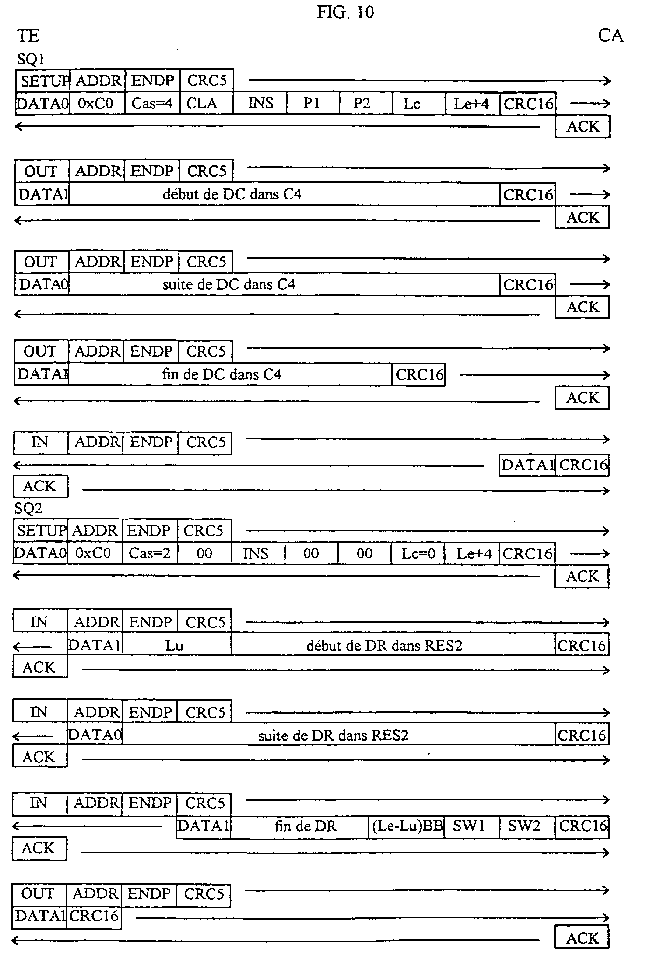

En référence maintenant à la figure 10, un échange d'une commande C4 et d'une réponse RES2 avec des données en mode de transfert de contrôle comprend une première séquence SQ1 de type OUT avec une étape d'établissement, une étape de données ayant au moins une transaction descendante OUT, par exemple trois transactions descendantes selon la figure 10, et une étape d'état, et une deuxième séquence SQ2 de type IN avec une étape d'établissement, une étape de données ayant au moins une transaction montante IN, par exemple trois transactions montantes selon la figure 10, et une étape finale d'état.

Dans la première séquence SQ1, la première transaction descendante constituant l'étape d'établissement SETUP est analogue à celle déjà décrite en référence à la figure 9, à la différence prêt qu'au début du champ de données du premier paquet de données DATA0, le champ CH2 contient un identificateur du quatrième format d'unité APDU correspondant à la commande C4 en cours de transmission, et le champ CH3 contient la longueur Lc des données de commande contenue dans le champ LC de la commande C4. Puis chacune des trois transactions descendantes de l'étape de données dans la première séquence comprend un paquet de début OUT transmis par le terminal à la carte, un paquet de données DATA1 ou DATA0 transmis par le terminal à la carte, et un paquet de fin ACK transmis par la carte au terminal en réponse au paquet de données précédent reçu correctement. Les données DC de la commande C4 remplissent au fur et à mesure et jusqu'à leur maximum de longueur les champs de données DATA dans les paquets de données DATA0 et DATA1 alternativement transmis ; par exemple si la longueur maximum du champ de données DATA des paquets de données DP a été négociée à 8 octets, les champs de données des paquets DATA1, DATA0 et DATA1 dans la première séquence contiennent respectivement 8 octets, 8 octets et 6 octets pour un champ de données DC contenant 22 octets.

L'étape de données précédente dans la première séquence SQ1 comprenant des transactions de type OUT, l'étape d'état terminant la première séquence est alors une transaction montante IN et comprend un paquet de début TP de type IN transmis par le terminal à la carte, un paquet de données DATA1 sans champ de données transmis par la carte au terminal, et un paquet de fin ACK transmis par le terminal à la carte.

La deuxième séquence SQ2 de l'échange montré à la figure 10 comprend, outre une étape d'établissement, une étape de données ayant trois transactions montantes de type IN pour transmettre la réponse RES2, et une étape d'état analogues à la séquence illustrée à la figure 9.

Le paquet de données DATA0 après le paquet de début SETUP dans la transaction descendante qui constitue l'étape d'établissement de la deuxième séquence SQ2, a une structure identique au paquet DATA0 dans la première transaction descendante de la première séquence SQ1. Le champ CH2 indique le deuxième format de réponse avec données conformément à la réponse RES2 à la commande C4, les champs CLA, P1, P2 et CH3 contiennent des zéros et le champ CH₄ contient la longueur Le des données que la réponse RES2 doit contenir, augmentée du chiffre 4. Ce dernier chiffre 4 correspond au champ CH5-CH6, ici à deux octets, pour la longueur utile Lu de la réponse et à la queue à deux octets SW1 et SW2. Lorsque la longueur utile Lu contenue dans les champs CH5 et CH6 au début du champ de données DATA du paquet de données DATA1 de la première transaction IN dans l'étape de données de la deuxième séquence SQ2 est inférieure à la longueur attendue Le, le champ de données DATA du paquet de données DATA1 de la dernière transaction IN dans l'étape de données contient (Le - Lu) octets de bits de bourrage BB précédant les deux octets SW1 et SW2 de la queue Q de la réponse RES2.

## Revendications

1. - Procédé pour échanger, entre un terminal (TE) et un objet électronique portable (CA), au moins une unité de donnée du protocole applicatif dite APDU et définie selon la norme ISO 7816-4,
**caractérisé par** les étapes suivantes :
- relier, à travers un bus (BU) série universel dit bus USB, le terminal et l'objet électronique portable, pour échanger des transactions conformes à un mode de transfert de données volumineux dit mode bulk selon la norme USB, chaque transaction comprenant un paquet de données (DP),
- encapsuler chaque APDU au sein du paquet de données (DP) de la transaction (IN, OUT, DATA0, DATA1, ACK) à transférer entre le terminal (TE) et l'objet électronique portable (CA).

2. - Procédé selon la revendication 1,
dans lequel :
- une commande (C1 à C4) applicative comprend au moins une APDU,
- une réponse correspondante comprend au moins une réponse APDU, et chaque transaction transférée depuis le terminal (TE) vers l'objet électronique portable (CA) comprend en outre un paquet de début (TP), le paquet de début (TP) comprenant un identificateur (IN, OUT) annonçant le sens du transfert du paquet de données (DP) le succédant au sein d'un échange en cours.

3. - Procédé selon la revendication 2,
dans lequel le paquet de début (TP) de chaque transaction transférée depuis le terminal (TE) vers l*'*objet électronique portable (CA) relative au transfert d'au moins une partie d'un champ de données (DC, DR) d'une commande (C1 à C4) applicative ou d'une réponse (RES1, RES2) comprend un identificateur (OUT, IN) indiquant le sens du transfert du paquet de données (DP, DATA0 ou DATA1) le succédant au sein dudit échange.

4. - Procédé selon l'une quelconque des revendications 2 et 3,
dans lequel un champ de données (DATA) d'un paquet de données (DP, DATA0 ou DATA1) au sein d*'*une transaction (OUT, DATA0, ACK) transférée depuis le terminal (TE) vers l'objet électronique portable (CA) comprenant un en-tête (EN) d'une commande (C1 à C4) applicative comprend en outre la longueur attendue (Le) du champ de données (DR) de la réponse (RES1, RES2) succédant à ladite commande applicative et/ou la longueur (Lc) du champ de données (DC) de ladite commande applicative.

5. - Procédé selon l'une quelconque des revendications 2 à 4,
dans lequel un champ de données (DATA) d'un paquet de données (DP, DATA1) d'une première transaction transférée depuis l'objet électronique portable (CA) vers le terminal (TE) comprenant le début du champ de données (DR) d'une réponse (RES2) comprend également la longueur utile (Lu) de la réponse à une commande (C2, C4) applicative.

6. - Procédé selon la revendication 5,
dans lequel la longueur utile (Lu) est comprise au sein du champ de données (DATA) du paquet de données (DP, DATA0 ou DATA1) de la première transaction depuis l'objet électronique portable (CA) vers le terminal (TE), la dernière transaction depuis l'objet électronique portable (CA) vers le terminal (TE)comprenant un compte-rendu (SW1, SW2) de ladite réponse (RES2).

7. Objet électronique portable (CA) comprenant une interface de communication apte à :
- recevoir, de la part d'un terminal (TE), au moins une unité de donnée d'un protocole applicatif dite APDU et définie selon la norme ISO 7816-4,
- transmettre au moins une réponse APDU vers le terminal (TE) ;°
**caractérisé en ce que** le terminal et l'objet électronique portable sont reliés à travers un bus (BU) série universel dit bus USB, pour échanger des transactions conformes à un mode de transfert de données volumineux dit mode bulk selon la norme USB, chaque transaction comprenant un paquet de données (DP),
et **en ce que** l'objet électronique portable comprend :
- des moyens pour extraire une APDU encapsulée et comprise au sein d'au moins d*'*un paquet de données (DP) d'au moins une transaction (OUT, DATA0, ACK) reçue par l'objet électronique portable (CA) et transférée depuis le terminal (TE) ; et
- des moyens pour encapsuler ladite réponse APDU au sein d'un paquet de données (DP) d'une transaction (IN, OUT, DATA0, DATA1, ACK) à transférer depuis l'objet électronique portable (CA) vers le terminal (TE).

8. Terminal (TE) comprenant une interface de communication apte à :
- transmettre, vers un objet électronique portable (CA), au moins une unité de donnée d'un protocole applicatif dite APDU et définie selon la norme ISO 7816-4,
- recevoir, depuis l'objet électronique portable (CA), au moins une réponse APDU;°
**caractérisé en ce que** le terminal et l'objet électronique portable sont reliés à travers un bus (BU) série universel dit bus USB, pour échanger des transactions conformes à un mode de transfert de données volumineux dit mode bulk selon la norme USB, chaque transaction comprenant un paquet de données (DP),
et **en ce que** le terminal (TE) comprend :
- des moyens pour encapsuler une APDU au sein d'au moins d'un paquet de données (DP) d'au moins une transaction (OUT, DATA0, ACK) à transférer depuis le terminal (TE) vers l'objet électronique portable (CA) ; et
- des moyens pour extraire ladite réponse APDU encapsulée et comprise au sein d*'*un paquet de données (DP) d*'*une transaction (IN, OUT, DATA0, DATA1, ACK) transférée depuis l*'*objet électronique portable (CA) et reçue par le terminal (TE).

## Claims

1. - A method for exchanging, between one terminal (TE) and a portable electronic object (CA), at least a so-called APDU data unit of an application protocol, defined according to Standard ISO 7816-4,
**characterized by** the following steps:
- connecting the terminal and the portable electronic object, through a universal bus (BU), called Universal Serial Bus, to exchange transactions corresponding to a data transfer voluminous mode, called bulk mode according to the USB Standard, each transaction comprising a data packet (DP),
- encapsulating each ADPU within the data packet (DP) of the transaction (IN, OUT, DATA0, DATA1, ACK), to be transferred between the terminal (TE) and the portable electronic object (CA).

2. - A method according to claim 1,
wherein :
- one command (C1 to C4) comprises at least one APDU,
- a corresponding answer comprises at least one APDU answer, and each transaction transferred from the terminal (TE) and the portable electronic object (CA) further comprises a start packet (TP), the start packet (TP) comprising an identifier (IN, OUT), which indicates the direction of the transfer of the data packet (DP) which is following within the current exchange.

3. - A method according to claim 2,
wherein the start packet (TP) of each transaction transferred from the terminal (TE) and the portable electronic object (CA) concerning the transfer of at least one portion of a data field (DC, DR), an application command (C1 to C4) or an answer (RES1, RES2) comprises an identifier (OUT, IN), which indicates the direction of the transfer of the data packet (DP, DATA0 or DATA1) which is following within said exchange.

4. - A method according to claims 2 and 3,
wherein a data field (DATA) of a data packet (DP, DATA0 or DATA1) within a transaction (OUT, DATA0, ACK) transferred from the terminal (TE) to the portable electronic object (CA) comprising a header (EN) of an application command (C1 to C4) further comprises the expected length (Le) of the data field (DR) of the answer (RES1, RES2) following said application command and/or the length (Lc) of the data field (DC) of said application command.

5. - A method according to claims 2 to 4,
wherein a data field (DATA) of a data packet (DP, DATA1) of a first transaction transferred from the portable electronic object (CA) to the terminal (TE) comprising the start of the data field (DR) of an answer (RES2) also comprises the useful length (Lu) of the answer to an application command (C2, C4).

6. - A method according to claim 5,
wherein the useful length (Lu) is comprised within the data field (DATA) of the data packet (DP, DATO or DATA1) of the first transaction from the portable electronic object (CA) to the terminal (TE), the last transaction from the portable electronic object (CA) to the terminal (TE) comprising a report (SW1, SW2) of said answer (RES2).

7. - A portable electronic object (CA) comprising a communication interface able to:
- receive, from a terminal (TE), at least one so-called APDU data unit of an application protocol, defined according to Standard ISO 7816-4,
- transmit at least one APDU answer to the terminal (TE),
**characterized in that** the terminal and the portable electronic object are connected through a universal bus (BU), called Universal Serial Bus, to exchange transactions corresponding to a data transfer voluminous mode, called bulk mode according to the USB Standard, each transaction comprising a data packet (DP),
and **in that** the portable electronic object comprises:
- means for extracting an encapsulated APDU comprised within at least one data packet (DP) of at least one transaction (OUT, DATO, ACK) received by the portable electronic object (CA) and transferred from terminal (TE); and
- means for encapsulating said ADPU answer within a data packet (DP) of a transaction (IN, OUT, DATA0, DATA1, ACK) to be transferred from the portable electronic object (CA) to the terminal (TE).

8. A terminal (TE) comprising a communication interface able to:
- transmit to a portable electronic object (CA), at least one so-called APDU data unit of an application protocol, defined according to Standard ISO 7816-4,
- receive, from the portable electronic object (CA) at least one APDU answer,
**characterized in that** the terminal and the portable electronic object are connected through a universal bus (BU), called Universal Serial Bus, to exchange transactions corresponding to a data transfer voluminous mode, called bulk mode according to the USB Standard, each transaction comprising a data packet (DP),
and **in that** the terminal (TE) comprises:
- means for encapsulating one APDU within at least one data packet (DP), of at least one transaction (OUT, DATA0, ACK) to be transferred from the terminal (TE) to the portable electronic object (CA); and
- means for extracting said encapsulated APDU answer comprised within a data packet (DP), of a transaction (IN, OUT, DATO, DATA1, ACK) transferred from the portable electronic object (CA) and received by the terminal (TE).

## Patentansprüche

1. - Verfahren für den Austausch, zwischen einem Terminal (TE) und einem tragbaren elektronischen Objekt (CA), mindestens einer APDU genannten Dateneinheit des Applikationsprotokolls, definiert gemäß der Norm ISO 7816-4,
**gekennzeichnet durch** die folgenden Schritte:
- Verbindung des Terminals und des tragbaren elektronischen Objekts über einen universalen Serienbus (BU), dem so genannten Bus USB, um einem voluminösen Datentransfermodus, dem so genannten Bulk-Modus, entsprechende Transaktionen auszutauschen, wobei jede Transaktion ein Datenpaket (DP) umfasst,
- Einschluss jeder ADPU in das Datenpaket (DP) der Transaktion (IN, OUT, DATA0, DATA1, ACK), das zwischen dem Terminal (TE) und dem tragbaren elektronischen Objekt (CA) übertragen werden soll.

2. - Verfahren gemäß Anspruch 1,
bei dem:
- ein Applikationsbefehl (C1 bis C4) mindestens eine APDU umfasst,
- eine entsprechende Antwort mindestens eine Antwort ADPU umfasst, und jede von dem Terminal (TE) an das tragbare elektronische Objekt (CA) übertragene Transaktion ferner ein Anfangspaket (TP) enthält, wobei das Anfangspaket (TP) einen Identifikator (IN, OUT) aufweist, der die Transferrichtung des ihm innerhalb des laufenden Austausches folgenden Datenpakets (DP) angibt.

3. - Verfahren gemäß Anspruch 2,
bei dem das Anfangspaket (TP) jeder von dem Terminal (TE) an das tragbare elektronische Objekt (CA) übertragenen Transaktion bezüglich des Transfers mindestens eines Teils eines Datenfelds (DC, DR) eines Applikationsbefehls (C1 bis C4) oder einer Antwort (RES1, RES2) einen Identifikator (OUT, IN) umfasst, der die Transferrichtung des ihm innerhalb des besagten Austausches folgenden Datenpakets (DP, DATA0 oder DATA1) anzeigt.

4. - Verfahren gemäß einem der Ansprüche 2 und 3,
bei dem ein Datenfeld (DATA) eines Datenpakets (DP, DATA0 oder DATA1) innerhalb einer von dem Terminal (TE) an das tragbare elektronische Objekt (CA) übertragenen Transaktion (OUT, DATA0, ACK) mit einer Titelzeile (EN) eines Applikationsbefehls (C1 bis C4) ferner die erwartete Länge (Le) des Datenfelds (DR) der auf den genannten Applikationsbefehl folgenden Antwort (RES1, RES2) und/oder die Länge (Lc) des Datenfelds (DC) des genannten Applikationsbefehls umfasst.

5. - Verfahren gemäß einem der Ansprüche 2 bis 4,
bei dem ein Datenfeld (DATA) eines Datenpakets (DP, DATA1) einer ersten, von dem tragbaren elektronischen Objekt (CA) an das Terminal (TE) übertragenden Transaktion mit dem Anfang des Datenfelds (DR) einer Antwort (RES) ebenfalls die nützliche Länge (Lu) der Antwort auf einen Applikationsbefehl (C2, C4) umfasst.

6. - Verfahren gemäß Anspruch 5,
bei dem die nützliche Länge (Lu) innerhalb des Datenfelds (DATA) des Datenpakets (DP, DAT0 oder DATA1) der ersten, von dem tragbaren elektronischen Objekt (CA) zum Terminal (TE) übertragenen Transaktion enthalten ist, wobei die letzte Transaktion von dem tragbaren elektronischen Objekt (CA) zum Terminal (TE) einen Bericht (SW1, SW2) der genannten Antwort (RES2) umfasst.

7. - Tragbares elektronisches Objekt (CA) mit einer Kommunikationsschnittstelle geeignet für:
- den Empfang vonseiten des Terminals (TE) mindestens einer APDU genannten Dateneinheit eines Applikationsprotokolls, definiert gemäß der Norm ISO 7816-4,
- die Übertragung mindestens einer Antwort APDU an das Terminal (TE),
**dadurch gekennzeichnet, dass** das Terminal und das tragbare elektronische Objekt über einen universalen Serienbus (BU), dem so genannten Bus USB, verbunden sind, um einem voluminösen Datentransfermodus, dem Bulk-Modus gemäß der Norm USB, entsprechende Transaktionen auszutauschen, wobei jede Transaktion ein Datenpaket (DP) umfasst,
und dass das tragbare elektronische Objekt die folgenden Mittel enthält:
- Mittel zum Extrahieren einer APDU, die innerhalb mindestens eines Datenpakets (DP) mindestens einer von dem tragbaren elektronischen Objekt (CA) empfangenen und von dem Terminal (TE) übertragenen Transaktion (OUT, DAT0, ACK) eingeschlossen und enthalten ist; und
- Mittel zum Einschließen der genannten Antwort APDU innerhalb eines Datenpakets (DP) einer von dem tragbaren elektronischen Objekt (CA) zum Terminal (TE) zu übertragenden Transaktion (IN, OUT, DATA0, DATA1, ACK).

8. Terminal (TE) mit einer Kommunikationsschnittstelle geeignet für:
- die Übertragung mindestens einer APDU genannten Dateneinheit eines Applikationsprotokolls, definiert gemäß der Norm ISO 7816-4, an ein tragbares elektronisches Objekt (CA),
- den Empfang mindestens einer Antwort APDU ab dem tragbaren elektronischen Objekt (CA),
**dadurch gekennzeichnet, dass** das Terminal und das tragbare elektronische Objekt über einen universalen Serienbus (BU), dem so genannten Bus USB, verbunden sind, um einem voluminösen Datentransfermodus, dem Bulk-Modus gemäß der Norm USB, entsprechende Transaktionen auszutauschen, wobei jede Transaktion ein Datenpaket (DP) umfasst,
und dass das Terminal (TE) die folgenden Mittel enthält:
- Mittel zum Einschließen einer APDU innerhalb mindestens eines Datenpakets (DP) mindestens einer von dem Terminal (TE) zum tragbaren elektronischen Objekt (CA) zu übertragenden Transaktion (OUT, DATA0, ACK); und
- Mittel zum Extrahieren der genannten Antwort APDU, die innerhalb eines Datenpakets (DP) mindestens einer von dem tragbaren elektronischen Objekt (CA) übertragenen und von dem Terminal (TE) empfangenen Transaktion (IN, OUT, DAT0, DATA1, ACK) eingeschlossen und enthalten ist.
